# EUROPÄISCHE PATENTSCHRIFT

(11) **EP 4 063 476 B1**
(45) Veröffentlichungstag und Bekanntmachung des Hinweises auf die Patenterteilung: **02.09.2026**
(21) Anmeldenummer: 22154466.1
(22) Anmeldetag: 01.02.2022
(51) Int. Cl.: C12H 1/02, C12H 1/07

(54) **STABILISIERUNG VON BIER**
STABILIZATION OF BEER
STABILISATION DE LA BIÈRE

(30) Priorität: 22.03.2021 DE 102021106945
(43) Veröffentlichungstag der Anmeldung: 28.09.2022
(73) Patentinhaber: KRONES Aktiengesellschaft, 93073 Neutraubling (DE)
(72) Erfinder: SCHEIDEL, Alexander, 93073 Neutraubling (DE)
(74) Vertreter: Grünecker Patent- und Rechtsanwälte PartG mbB

(56) Entgegenhaltungen:
- US-A1- 2014 004 237
- US-A1- 2018 100 130
- US-A1- 2019 002 669

## Beschreibung

### Gebiet der Erfindung

Die vorliegende Erfindung betrifft die Stabilisierung von Bier.

### Stand der Technik

Am Ende des Reifungsprozesses weist Bier eine Vielzahl an Hefe- und Trübungspartikeln auf, die aus optischen Gründen und insbesondere zum Zwecke der Haltbarmachung zu entfernen sind. Bei der Filtration wird das Bier von seinen Trübungsstoffen befreit, sodass ein klares Filtrat entsteht. Die Stabilisierung hat zum Ziel, Stoffe aus dem Filtrat zu entfernen, welche sich im Laufe der Zeit innerhalb des abgefüllten Gebindes zu Trubstoffen verbinden, die ab einer bestimmten Größe visuell als Trübung zu erkennen sind. Diese Stoffe und Trübungen bestehen meist aus Eiweiß-Gerbstoff-Verbindungen.

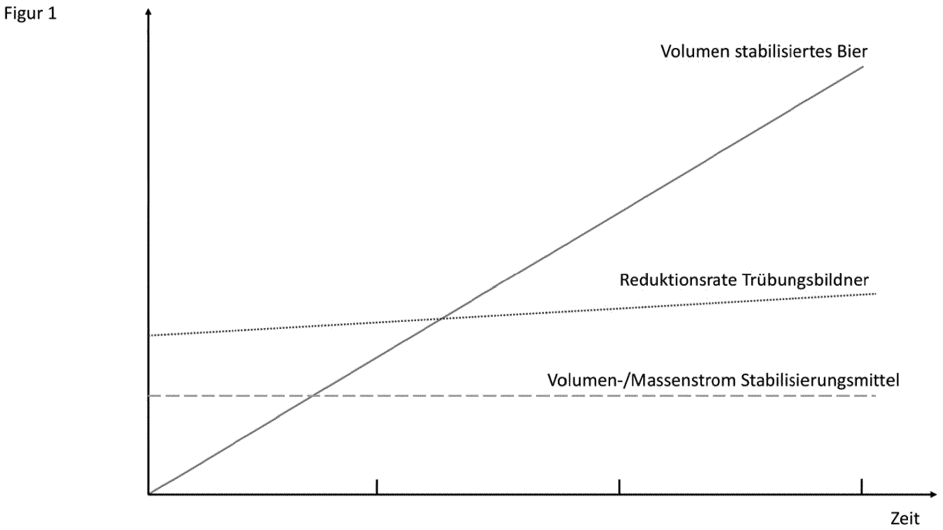

Der Zeitraum, bis zu dem Trübungen sichtbar werden, beeinflusst maßgeblich das Mindesthaltbarkeitsdatum eines abgefüllten Bieres, weshalb sich die Stabilisierung von Bier zur Erhöhung der Haltbarkeit breitflächig durchgesetzt hat. Insbesondere sind hierbei Eiweiße und/oder Gerbstoffe (Polyphenole) im Bier zu reduzieren. Dabei wird im Stand der Technik dem filtrierten Bier, wie es in Figur 1 dargestellt ist, ein Stabilisierungsmittel volumenproportional (d.h. mit konstantem Massen-/Volumenstrom) zudosiert, welches nach einer definierten Kontaktstrecke und dementsprechend Kontaktzeit an einem Filtermittel, wie beispielsweise einer Filterkerze, Filterscheibe oder einem Spaltsieb, wieder aus der Flüssigkeit entfernt wird. Daneben besteht auch die Möglichkeit, das Stabilisierungsmittel (beispielsweise PVPP) bereits bei der Filtration zusätzlich zum Filterhilfsmittel (beispielsweise Kieselgur, Cellulose oder Perlite) zu zudosieren.

Figur 1 zeigt den konstant über die Zeit (Abszisse) zudosierten Massenstrom des Stabilisierungsmittels bzw. Volumenstrom der Stabilisierungsmittelsuspension (gestrichelte Linie), das kontinuierlich über die Zeit anwachsende stabilisierte Bier (durchgezogene Linie) und die Reduktionsrate der Trübungsbildner (gepunktete Linie).

Zur gerbstoffseitigen Stabilisierung wird in Brauereien oft Polyvinylpolypyrrolidon (PVPP) eingesetzt, um die Menge an gelösten Polyphenolen im Filtrat zu reduzieren. Bei der herkömmlichen konstanten volumenproportionalen Dosage von PVPP basiert die Stabilisierungswirkung auf der Kontaktzeit zwischen PVPP und dem zu stabilisierenden Bier innerhalb der Strömung zu den Filterelementen. Dabei ist die Stabilisierungswirkung abhängig von der Diffusion der Polyphenolmoleküle zu den PVPP-Partikeln, da innerhalb der Strömung (fast) keine Relativgeschwindigkeit zwischen den Stabilisierungsmitteln und dem zu stabilisierenden Bier vorliegt. Die Masse an eingesetztem PVPP wird dabei empirisch ermittelt und über die Mindesthaltbarkeit des stabilisierten Bieres validiert. Am Ende der Kontaktstrecke wird das Stabilisierungsmittel auf einem Filtermittel angeschwemmt und mit der nachfolgenden Suspension durchströmt, wobei die Höhe des Filterkuchens anwächst.

Im Stand der Technik muss jedoch ein Überschuss an Stabilisierungsmittel zudosiert werden. Das ist beispielsweise dadurch erkennbar, dass ein Teil der Stabilisierungswirkung auf dem bereits auf dem Filtermittel angeschwemmten Filterkuchen beruht, was in einer zunehmenden Stabilisierungsrate während der Laufzeit eines Filters erkennbar ist. Wäre diese Stabilisierungswirkung bei der Durchströmung des angeschwemmten Kuchens nicht vorhanden, müsste die Reduktionsrate über den gesamten Stabilisierungsprozess konstant bleiben. Aufgrund dieser Erkenntnis ist ersichtlich, dass sich innerhalb des angeschwemmten Filterkuchens aus Stabilisierungsmittel noch freie Bindungsstellen zur Adsorption der potenziellen Trübungsbildner befinden, und das Stabilisierungsmittel somit im Überschuss dem zu stabilisierenden Bier zudosiert wurde.

Folglich resultiert aus einer konstanten volumenproportionalen Dosage (also mit konstanten Massenstrom) an Stabilisierungsmittel ein unnötig hoher Verbrauch von diesem Stabilisierungsmittel. Dies führt zu unnötig hohen Kosten für den Einsatz des Stabilisierungsmittels und zudem zu einer Verringerung der maximalen Laufzeit (Standzeit) eines Filters, da die maximale Kuchenhöhe früher als nötig erreicht wird.

In der US 2014/004237 A1 wird ein Verfahren zur Stabilisierung von Bier mithilfe von zwei oder drei in Reihe oder parallel gefahrenen Filtern beschrieben. Zu stabilisierendes Bier wird zum Anschwemmen des Stabilisierungsmittels einem ersten Filter zugeleitet und nachfolgend das dadurch teilweise stabilisierte Bier (das somit einen geringeren Gehalt an Stabilisierungsmittel aufweist) einem zweiten Filter, bei dem bereits eine Anschwemmung des Stabilisierungsmittels vollständig stattgefunden hat, zur vollständigen Stabilisierung zugeleitet. In der US 2019/002669 A1 wird ein Verfahren zur Klärung von Flüssigkeiten mithilfe von Zellulosefasern beschrieben.

In der WO 2016/169924 A1 wird ein Verfahren zur Bierstabilisierung beschrieben, in dem die Dosage eines Stabilisierungsmittels in Abhängigkeit von einem während des Stabilisierungsprozesses gemessenen Polyphenol-Gehalts erfolgt. Hierfür ist jedoch eine relativ aufwändige Einrichtung zur Messung/Ermittlung des Polyphenol-Gehalts und entsprechende Regelung des Massenstroms des Stabilisierungsmittels erforderlich.

Somit liegt der vorliegenden Erfindung die Aufgabe zugrunde, ein Verfahren zur Stabilisierung von Bier bereitzustellen, das eine effizientere und kostengünstigere Stabilisierung erlaubt, als es im Stand der Technik möglich ist.

### Beschreibung der Erfindung

Die oben genannte Aufgabe wird durch ein Verfahren zur Bierstabilisierung gelöst, das die Schritte des Zuleitens einer Charge (Produktionseinheit) von zu stabilisierenden Bier zu einem Filtermittel über eine Zeitdauer, die aus einer Mehrzahl von Zeitintervallen besteht, und Dosierens eines Stabilisierungsmittels zu dem zu stabilisierenden Bier innerhalb der Zeitdauer, um Trübungsbildner aus dem zu stabilisierenden Bier zu entfernen, umfasst. Hierbei erfolgt das Dosieren des Stabilisierungsmittels (für die Charge) mithilfe einer geregelten oder gesteuerten Dosagepumpe gemäß einem vorbestimmten Dosageschema (Dosageprogramm) derart, dass in zumindest zwei Zeitintervallen der Mehrzahl von Zeitintervallen unabhängig von einer in den zumindest zwei Zeitintervallen vorliegenden Menge der Trübungsbildner in dem zu stabilisierenden Bier das Stabilisierungsmittel mit einem unterschiedlichen Massenstrom (hier und im Weiteren ist Massenstrom eines Stabilisierungsmittels als Massenstrom eines Stabilisierungsmittels beziehungsweise Volumenstrom einer Stabilisierungsmittelsuspension zu lesen) zudosiert wird. Das Dosageschema ist dabei zeitabhängig und unabhängig von einer Konzentration der Trübungsbildner in dem zu stabilisierenden Bier. Das Filtermittel ist Teil einer Filtereinrichtung. Die Filtereinrichtung kann ein Anschwemmfilter sein. Das Filtermittel kann beispielsweise eine Filterkerze eines Anschwemmkerzenfilters sein oder umfassen. Das Dosageschema gibt die Dosage zeitabhängig und unabhängig von (einer Messung) der, gegebenenfalls zeitlich variierenden, Konzentration an Trübungsbildnern in dem zu stabilisierenden Bier der Charge vor.

Die Charge kann einer Menge entsprechen, die in einem bereitgestellten Drucktank nach der Stabilisierung aufgenommen werden kann. Die erfindungsgemäß auf der Grundlage des Dosageschemas dynamische Dosage des Stabilisierungsmittels erlaubt eine gleichförmige Stabilisierung über den gesamten Stabilisierungsvorgang hinweg, wobei gegenüber dem Stand der Technik die Gesamtmenge, die für die Stabilisierung einer Charge zu stabilisierenden Biers benötigt wird, beziehungsweise der apparative Aufwand verringert werden kann. Ebenso kann auch die Standzeit des zur Stabilisierung verwendeten Filters verlängert und/oder die Größe dieses Filters vorteilhafterweise gegenüber dem Stand der Technik verringert werden. Das Dosageschema ist hierbei von vorneherein festgelegt und basiert insbesondere nicht auf aktuellen Messungen der aktuellen Konzentration des Stabilisierungsmittels oder der mithilfe des Stabilisierungsmittels zu entfernenden Trübungsbildner wie Eiweißen oder Polyphenolen. Als Stabilisierungsmittel kann beispielsweise Polyvinylpolypyrrolidon (PVPP) dienen. Andere Stabilisierungsmittel, die Verwendung finden können, sind beispielsweise Polyvinylpyrrolidon (PVP), Polyamidpulver, Gelatine, Bentonit, Tannin, Kieselgel und Kieselsol.

Beispielsweise kann das gesamte zu stabilisierende Volumen der Charge zu stabilisierenden Biers durch eine das Filtermittel umfassende Filtereinrichtung geleitet werden. Gemäß diesem Beispiel erfolgt also für eine vorbestimmte zu stabilisierende Menge Bier keine Umleitung einer Teilmenge des zu stabilisierenden Volumens um die Filtereinrichtung herum.

Da die Stabilisierungswirkung auf der Durchströmung des Kuchens basiert, kann die Strömungsgeschwindigkeit entsprechend erhöht werden, sodass der Filterkuchen mit einer Lehrrohrgeschwindigkeit des zu stabilisierenden Biers im Bereich von 0,13 - 1,4 mm/s durchströmt werden kann.

Das Dosageschema kann den Massenstrom des zudosierten Stabilisierungsmittels beispielsweise in Abhängigkeit ausschließlich von a) der Zeit innerhalb der Zeitdauer und/oder b) dem (zu messenden) stabilisierten Volumen des zu stabilisierenden Biers (also dem Volumen des im Verlauf der Stabilisierung bereits stabilisierten Biers) vorgeben. Das genaue Dosageschema kann je nach Wahl des Filtermittels beziehungsweise Art des zu stabilisierenden Biers unterschiedlich ausgelegt sein.

Insbesondere kann es sich als vorteilhaft erweisen, zu Beginn der Stabilisierung der Charge zu stabilisierenden Biers eine relativ höhere Konzentration des Stabilisierungsmittels und zu einem späteren Zeitpunkt eine relativ niedrigere Konzentration des Stabilisierungsmittels zu verwenden. So kann gemäß einer Weiterbildung in einem ersten Zeitintervall der Mehrzahl von Zeitintervallen, insbesondere zu Beginn der Zeitdauer, das Stabilisierungsmittel mit einem ersten Massenstrom zudosiert werden, und einem zweiten Zeitintervall der Mehrzahl von Zeitintervallen, das innerhalb der Zeitdauer dem ersten Zeitintervall (unmittelbar oder nicht unmittelbar) folgt, das Stabilisierungsmittel mit einem zweiten Massenstrom zudosiert werden, der kleiner als der erste Massenstrom ist.

Beispielsweise kann in einem dritten Zeitintervall der Mehrzahl von Zeitintervallen, das (in der Zeitdauer) zwischen dem ersten Zeitintervall und dem zweiten Zeitintervall liegt, kein Stabilisierungsmittel zudosiert wird. Somit kann in einer ersten Phase der Bierstabilisierung eine relativ große Menge an Stabilisierungsmittel pro Zeiteinheit dem zu stabilisierenden Bier zudosiert werden, wobei in dieser ersten Phase eine Voranschwemmung des Filtermittels erfolgen kann. Die Menge des Stabilisierungsmittels kann so gewählt sein, dass eine hinreichende Stabilisierung von Bier, das das Filtermittel passiert, über ein bestimmtes Zeitintervall (das genannte dritte Zeitintervall), in dem kein weiteres Stabilisierungsmittel zudosiert wird, erfolgt. Mit anderen Worten erfolgt in diesem (dritten) Zeitintervall die Stabilisierung ausschließlich durch das Durchströmen des zu stabilisierenden Biers durch den sich an dem Filtermittel ausbildenden Filterkuchen. Im Anschluss an dieses (dritte) Zeitintervall wird wieder Stabilisierungsmittel zudosiert, jedoch mit einer gegenüber derjenigen zu Beginn des Stabilisierungsvorgangs verringerten Dosage. Durch effizientes Nutzen der Stabilisierung beim Durchgang durch den Filterkuchen kann die Gesamtdosage während der Zeitdauer der Stabilisierung der Charge des zu stabilisierenden Biers gegenüber der konstanten volumenproportionalen Dosage an Stabilisierungsmittel deutlich verringert werden.

Gemäß einer alternativen Weiterbildung des Bierstabilisierungsverfahrens wird über zumindest einen Teil der Mehrzahl von Zeitintervallen in jeweils aneinander angrenzenden Zeitintervallen abwechselnd das Stabilisierungsmittel mit dem ersten Massenstrom und dem zweiten Massenstrom zudosiert. Beispielsweise kann in einem ersten Zeitintervall das Stabilisierungsmittel mit einem bestimmten ersten Massenstrom zudosiert werden, in einem unmittelbar daran angrenzenden zweiten Zeitintervall das Stabilisierungsmittel mit einem zweiten Massenstrom, der nur noch einem Anteil (etwa zwischen einem Fünftel und der Hälfte) des bestimmten ersten Massenstroms ist, zudosiert werden, in einem unmittelbar an dem zweiten angrenzenden dritten Zeitintervall das Stabilisierungsmittel wieder mit dem ersten Massenstrom zudosiert werden und in einem an dem dritten unmittelbar angrenzenden vierten Zeitintervall das Stabilisierungsmittel wieder mit dem zweiten Massenstrom zudosiert werden, usw.

Gemäß einer weiteren Weiterbildung wird über zumindest einen Teil der Mehrzahl von Zeitintervallen das Stabilisierungsmittel mit einem im Verlauf der Zeitdauer von Zeitintervall zu Zeitintervall abnehmenden Massenstrom zudosiert. Die Dosage kann hierbei kontinuierlich/stetig abnehmend oder über abnehmende Plateaus der Konzentration beziehungsweise des Massenstroms des Stabilisierungsmittels erfolgen, sodass einer im Verlauf des Prozesses der Stabilisierung steigenden Reduktionsrate der Trübungsbildner entgegengewirkt werden kann. Somit lässt sich einerseits eine über den Verlauf der Bierstabilisierung gleichförmige Stabilisierung und andererseits eine Einsparung der für die Charge notwendigen Gesamtmenge an Stabilisierungsmittel erreichen.

Während in der Fach- und Patentliteratur teilweise nicht streng zwischen dem Filtrieren gereiften Biers und dem Stabilisieren desselben unterschieden wird, werden hier das Filtrieren und das Stabilisieren getrennt voneinander betrachtet. So können für das Filtrieren und das Stabilisieren unterschiedliche Filterhilfsmittel und Stabilisierungsmittel verwendet werden, beispielsweise Kieselgur für das Filtrieren und PVPP für das Stabilisieren. Es sei erwähnt, dass es auch kombinierte Filterhilfsmittel gibt, die sowohl dem Filtrieren als auch dem Stabilisieren dienen, wie beispielsweise Crosspure. In der vorliegenden Erfindung werden aber gemäß bestimmter Ausführungsformen reine Stabilisierungsmittel verwendet und keine kombinierten Filterhilfsmittel, die sowohl dem Filtrieren als auch dem Stabilisieren dienen. Es werden beispielsweise bei der Anschwemmfiltration von Bier Partikel sowohl an der Oberfläche des Filterkuchens wie auch in der Tiefe abgeschieden, weshalb zur Vermeidung von Verblockungen der Oberfläche kontinuierlich Filterhilfsmittel dosiert werden muss, um die Siebwirkung des Filterkuchens zu erhalten. Bei der Stabilisierung von Bier hingegen werden nur noch gelöste Moleküle an Stabilisierungsmitteln adsorbiert, nachdem das Bier bereits von den durch Filtration abtrennbaren partikulären Trübungsstoffen durch Filtration befreit wurde. Das heißt, die durch Stabilisierung zu entfernenden Inhaltsstoffe des Bieres konnten durch eine Filtration nicht entfernt werden. Deshalb ist auch die Menge an freien Bindungsstellen für die adsorptive Entfernung beispielsweise der Polyphenole im Filterkuchen ausschlaggebend und die Siebwirkung des Filterkuchens weniger wichtig.

So wird hier auch ein Verfahren zum Behandeln von Bier bereitgestellt, das die Schritte eines der oben beschriebenen Verfahren zur Bierstabilisierung und das Filtrieren des zu stabilisierenden Biers vor dem Zuleiten der Charge von zu stabilisierenden Bier zu dem Filtermittel umfasst. Gemäß einer Alternative wird ein Verfahren zum Behandeln von Bier bereitgestellt, das die Schritte eines der oben beschriebenen Verfahren zur Bierstabilisierung und das Filtrieren des zu stabilisierenden Biers mithilfe des Filtermittels. Das Filtrieren kann also entweder in einem Filter vor dem Stabilisieren oder mithilfe desselben Filters/Filtermittels, der/das für das Stabilisieren verwendet wird, erfolgen.

Weiterhin wird die oben genannte Aufgabe durch Bereitstellen einer Anlage zur Bierherstellung gelöst, die einen Filter mit einem Filtermittel (beispielsweise einen Anschwemmkerzenfilter mit einer Filterkerze), eine Dosagepumpe und eine Steuerungs-/Regeleinrichtung umfasst. Die Steuerungs-/Regeleinrichtung ist dazu ausgebildet, das Zuleiten einer Charge von zu stabilisierenden Bier zu dem Filtermittel über eine Zeitdauer, die aus einer Mehrzahl von Zeitintervallen besteht, zu steuern oder regeln; die Dosagepumpe zum Dosieren eines Stabilisierungsmittels zu dem zu stabilisierenden Bier innerhalb der Zeitdauer, um Trübungsbildner aus dem zu stabilisierenden Bier zu entfernen, zu steuern oder regeln und die Dosagepumpe gemäß einem vorbestimmten Dosageschema derart zu steuern oder regeln, dass das Dosieren des Stabilisierungsmittels derart erfolgt, dass in zumindest zwei Zeitintervallen der Mehrzahl von Zeitintervallen unabhängig von einer in den zumindest zwei Zeitintervallen vorliegenden Menge der Trübungsbildner in dem zu stabilisierenden Bier das Stabilisierungsmittel mit einem unterschiedlichen Massenstrom zudosiert wird, wobei das Dosageschema zeitabhängig und unabhängig von einer Konzentration der Trübungsbildner in dem zu stabilisierenden Bier ist. Beispielsweise kann die Steuerungs-/Regeleinrichtung die Dosage des Stabilisierungsmittels durch eine Dosagepumpe in Abhängigkeit von dem Volumen des (bereits) stabilisierten Biers regeln.

Im Folgenden werden Ausführungsformen eines erfindungsgemäßen Verfahrens unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht relevante Parameter eines Bierstabilisierungsverfahrens basierend auf einer herkömmlichen konstanten volumenproportionalen Dosage eines Stabilisierungsmittels.
Figur 2 veranschaulicht relevante Parameter eines Bierstabilisierungsverfahrens gemäß einer Ausführungsform der vorliegenden Erfindung.
Figur 3 veranschaulicht relevante Parameter eines Bierstabilisierungsverfahrens gemäß einer weiteren Ausführungsform der vorliegenden Erfindung.
Figur 4 veranschaulicht relevante Parameter eines Bierstabilisierungsverfahrens gemäß einer weiteren Ausführungsform der vorliegenden Erfindung.
Figur 5 veranschaulicht Komponenten einer Anlage zur Bierherstellung gemäß einer Ausführungsform der vorliegenden Erfindung.

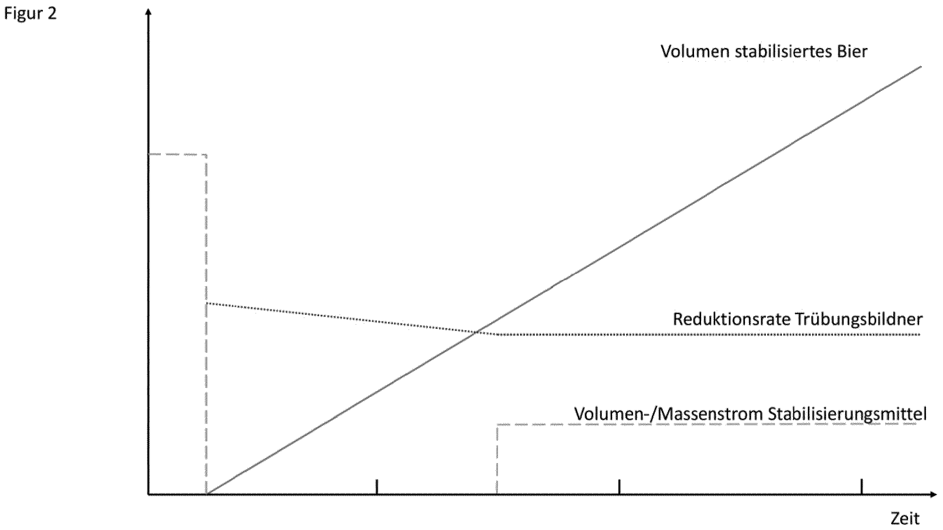

Erfindungsgemäß wird Bier auf der Grundlage eines Dosageschemas stabilisiert, gemäß dem während der Stabilisierung einer Charge zu stabilisierenden Biers eine veränderliche Menge eines Stabilisierungsmittels pro Zeiteinheit dem zu stabilisierenden Bier zugeführt wird. Ein solches Dosageschema ermöglicht es, die Menge des für eine Charge zu stabilisierenden Biers benötigten Stabilisierungsmittels gegenüber dem Stand der Technik zu verringern und ermöglicht so längere Standzeiten und/oder kleiner dimensionierte Filtereinrichtungen für die Stabilisierung als es im Stand der Technik bekannt ist. Durch die Stabilisierungswirkung aufgrund der Durchströmung des Filterkuchens und nicht aufgrund der Kontaktzeit kann die Filterkesselgröße reduziert werden, die die Gesamtverweilzeit bis zur Anschwemmung auf den Kerzen definiert. Insbesondere kann die Menge an reduzierten Trübungsbildnern pro Menge des eingesetzten Stabilisierungsmittels gegenüber dem Stand der Technik erhöht werden, ohne dass es zu einer Überstabilisierung (unnötigen Dosage ungenutzten Stabilisierungsmittels) kommt. Die genannten Vorteile können insbesondere mithilfe der in den Figuren 2 bis 4 veranschaulichten Dosageschemata erreicht werden.

Das zu stabilisierende Bier wird durch ein Filtermittel (zum Beispiel eine Filterkerze) geleitet. Dynamisch wird dem zu stabilisierenden Bier ein Stabilisierungsmittel zudosiert. Das Stabilisierungsmittel kann Polyvinylpolypyrrolidon (PVPP) sein oder dieses umfassen. Andere Stabilisierungsmittel, die Verwendung finden können, sind beispielsweise Polyvinylpyrrolidon (PVP), Polyamidpulver, Gelatine, Bentonit, Tannin, Kieselgel und Kieselsol.

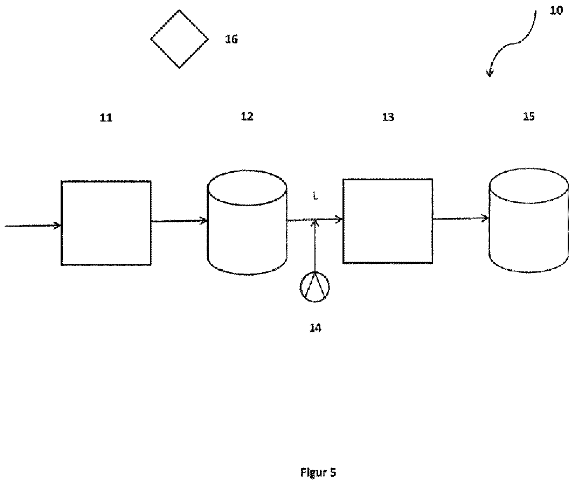

Beispielsweise kann zu Beginn des Stabilisierungsprozesses einer Charge zu stabilisierenden Biers eine relativ große Menge (pro Zeiteinheit) an Stabilisierungsmittel zudosiert werden, und im weiteren Verlauf des Stabilisierungsprozesses kann die Menge (pro Zeiteinheit) an Stabilisierungsmittel, die zudosiert wird, reduziert werden. Verschiedene dynamische Dosageschemata (Dosageprogramme) sind in den Figuren 2 bis 4 gezeigt. Eine Anlage 10 zur Bierherstellung, in der diese Dosageschemata realisiert werden können, ist schematisch in Figur 5 gezeigt.

Gemäß einer Ausführungsform des erfindungsgemäßen Verfahrens zur Bierstabilisierung wird zu stabilisierendes Bier aus dem Lagerkeller zunächst zur Filtration einer Filtereinrichtung 11 der Anlage 10 zur Bierherstellung zugeleitet (siehe Figur 5). Die Filtereinrichtung 11 kann ein Anschwemmfilter, beispielhaft mit Filterkerzen, Filterscheiben oder Filterplatten als Filtermittel, wie auch ein Membranfilter (beispielhaft ein Crossflow-Filter), sein. Als Filterhilfsmittel kann für die Anschwemmfiltration beispielsweise Kieselgur dienen, das dem in die Filtereinrichtung 11 eingeleiteten zu filtrierenden (und zu stabilisierenden) Bier zudosiert wird. An den Filtermittel (beispielsweise Filterkerzen) der Filtereinrichtung 11 bildet sich ein Filterkuchen, durch den das Bier gefiltert wird. Das Filtrat (das gefilterte, von Trübungsstoffen weitestgehend befreite und noch zu stabilisierende Bier) wird aus der Filtereinrichtung 11 ausgeleitet und in einen in Figur 5 gezeigten optionalen Puffertank (oder ein optionales Ausgleichsgefäß) 12 eingeleitet. Der Filterkuchen kann mit einer Lehrrohrgeschwindigkeit des zu stabilisierenden Biers im Bereich von 0,13 - 1,4 mm/s durchströmt werden.

Von dem optionalen Puffertank 12 wird das gefilterte und noch zu stabilisierende Bier in eine weitere Filtereinrichtung 13 geleitet, in der die Bierstabilisierung erfolgt, durch die Trübungsbildner wie Polyphenole und Eiweiße reduziert werden. Für die Bierstabilisierung wird ein Stabilisierungsmittel (beispielsweise PVPP) dem zu stabilisierenden Bier zudosiert. Beispielsweise kann das Stabilisierungsmittel in die Leitung L, über die das zu stabilisierende Bier in die Filtereinrichtung 13 eingeleitet wird, zudosiert werden. Die zeitlich dynamische Dosage des Stabilisierungsmittels kann mithilfe einer steuerbaren oder regelbaren Dosagepumpe 14 erfolgen.

Auch wenn erwähnt wurde, dass das Bier aus dem Lagerkeller der Filtration zugeleitet wird, so kann das Bier beispielsweise auch aus dem Gärkeller stammen. Eine Filtration des Biers ist lediglich optional, das Bier kann beispielsweise auch vom Gär- und/oder Lagerkeller direkt, also ohne Bierfiltration, der Bierstabilisierung zugeführt werden.

Die zur Bierstabilisierung verwendete Filtereinrichtung 13 kann ein Anschwemmkerzenfilter mit Filterkerzen als Filtermittel sein. An den Filtermittel (beispielsweise Filterkerzen) der Filtereinrichtung 13 bildet sich ein Filterkuchen, durch den das Bier stabilisiert wird. Durch die erfindungsgemäße dynamische Dosage des Stabilisierungsmittels können bei der Durchströmung des Filterkuchens mehr Bindungsstellen als bei einer konstanten volumenproportionalen Dosage genutzt werden. Dadurch kann die Menge an reduzierten Trübungsbildnern pro Menge des eingesetzten Stabilisierungsmittels gegenüber dem Stand der Technik erhöht werden. Gemäß einer alternativen Ausführungsform können die Filtration und die Stabilisierung unter Verwendung eines Filterhilfsmittels und eines Stabilisierungsmittels in ein und derselben Filtereinrichtung erfolgen.

Gemäß einer Ausführungsform wird das gesamte zu stabilisierende Volumen der Charge zu stabilisierenden Biers durch die Filtereinrichtung 13 geleitet, ohne dass ein Teil des Volumens zu einem nachfolgenden Verschneiden mit dem stabilisierten Bier (über eine Bypass-Leitung) um die Filtereinrichtung 13 herum geleitet werden würde.

Das stabilisierte Bier wird aus der Filtereinrichtung 13 ausgeleitet und in einen in Figur 5 gezeigten Drucktank/Puffertank 15 eingeleitet, vom dem es zur Abfüllung geliefert werden kann. Die Filtration und Stabilisierung des Biers kann durch eine Steuerungs-/Regeleinrichtung 16 der Anlage 10 zur Bierherstellung erfolgen. Insbesondere kann die Steuerungs-/Regeleinrichtung 16 den Betrieb der Dosagepumpe 14 gemäß einem vorbestimmten Dosageschema steuern oder regeln, beispielsweise den Betrieb der Dosagepumpe 14 zeitabhängig über die Zeitdauer der Stabilisierung einer Charge steuern. Das Dosageschema bestimmt die Dosage des Stabilisierungsmittels für eine Charge zu stabilisierenden Biers (die sich nach dem Aufnahmevolumen des Drucktanks bemisst) die nach der Stabilisierung von dem Drucktank/Puffertank 15 aufgenommen werden kann.

Beispielsweise kann die Steuerungs-/Regeleinrichtung 16 den Betrieb der Dosagepumpe 14 nach einem Zeitschema oder in Abhängigkeit von dem zeitabhängigen Volumen des stabilisierten Biers steuern. Eine Steuerung/Regelung der Dosagepumpe 14 in Abhängigkeit einer gemessenen Konzentration an Trübungsbildnern erfolgt erfindungsgemäß nicht. Wenn der Drucktank 15 mit dem stabilisierten Bier gefüllt ist, kann für einen weiteren Drucktank eine weitere Charge (die sich nach dem Aufnahmevolumen des weiteren Drucktanks bemisst) gemäß dem Dosageschema stabilisiert werden. Die verfügbare Standzeit der der Filtereinrichtung 13 zur Bierstabilisierung erlaubt beispielsweise die Stabilisierung von vier oder fünf Chargen zu stabilisierenden Biers und somit die Füllung von vier oder fünf Drucktanks mit stabilisiertem Bier.

In den Figuren 2 bis 4 sind gemäß verschiedener Ausführungsformen der Erfindung relevante Parameter für Dosageschemata für das Stabilisierungsmittel, die eine insgesamt gleichmäßige Bierstabilisierung über den Stabilisierungsprozess hinweg ermöglichen, gezeigt. Innerhalb der Zeitdauer der Stabilisierung kann es in unterschiedlichen Zeitintervallen zur verschiedenen Reduktionsraten der Trübungsbildner kommen, insgesamt gleicht sich die Stabilisierungswirkung über die Charge und somit im Drucktank aber weitestgehend aus. Auf den Abszissen ist jeweils die Zeit aufgetragen und die relevanten Parameter sind das Volumen des stabilisierten Biers, die Reduktionsrate der Trübungsbildner und der Massenstrom des eingesetzten Stabilisierungsmittels beziehungsweise Volumenstrom für den Fall eines in Form einer Suspension eingesetzten Stabilisierungsmittels. Die Dosageschemata werden etwa für die Stabilisierung einer Charge von zu stabilisierenden Bier zum Füllen eines Drucktanks mit stabilisiertem Bier und nachfolgend für die nächste Charge angewendet.

Gemäß der in Figur 2 gezeigten Ausführungsform erfolgt in einer anfänglichen Phase (in einem anfänglichen Zeitintervall) der Stabilisierung einer Charge zu stabilisierenden Biers eine relativ hohe Dosage des Stabilisierungsmittels welche beispielhaft in Form der Voranschwemmung des Stabilisierungsmittels an einem Filtermittel eines Anschwemmfilters (beispielhaft einem Kerzenfilter, oder Horizontalfilter oder Rahmenfilter) erfolgt. Eine solche Voranschwemmung kann beispielsweise über 5 bis 15 Minuten erfolgen. Die in dieser anfänglichen Phase der Bierstabilisierung zudosierte Menge des Stabilisierungsmittels ist so gewählt, dass für ein bestimmtes Zeitintervall (beispielsweise 1 bis 2 Stunden) eine gewünschte Stabilisierung ohne weitere Zugabe des Stabilisierungsmittels allein durch Durchströmen des zu stabilisierenden Biers durch den an dem Filtermittel angeschwemmten Filterkuchen erfolgt. Nach diesem bestimmten Zeitintervall kann bis zum Ende der Zeitdauer des Stabilisierungsprozesses der Charge zu stabilisierenden Biers eine weitere, insbesondere konstante, Dosage des Stabilisierungsmittels mit einem gegenüber der anfänglichen Phase der Stabilisierung deutlich verringerten Massen-/Volumenstrom vorgenommen werden. Beispielsweise kann bei einer Voranschwemmung mit ungefähr 800 g /m² Stabilisierungsmittel nach dem bestimmten Zeitintervall kein Stabilisierungsmittel dosiert wurde eine Dosage mit ungefähr 30 g /hl Stabilisierungsmittel erfolgen. Über den gesamten Stabilisierungsprozess hinweg kann eine relativ gleichförmige Reduktionsrate der Trübungsbildner, beispielsweise ungefähr 30 %, erreicht und eine Überstabilisierung vermieden werden.

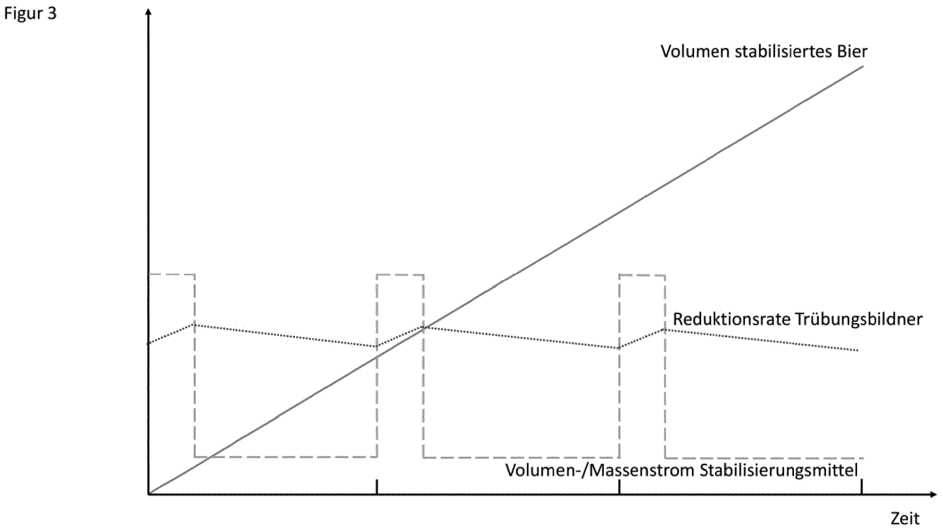

Gemäß der in Figur 3 gezeigten Ausführungsform weist das Dosageschema über die Zeitdauer des Stabilisierungsprozesses der Charge zu stabilisierenden Biers abwechselnd Zeitintervalle mit relativ hoher Dosage und Zeitintervalle mit relativ niedriger Dosage auf. Innerhalb einer Zeitperiode (durch die senkrechten Markierungen der Abszisse angezeigt) von beispielsweise 1 Stunde folgt ein Zeitintervall relativ niedriger Dosage einem Zeitintervall relativ hoher Dosage. Beispielsweise kann in dem Zeitintervall relativ hoher Dosage 80 % des gesamten Stabilisierungsmittels, das in der Zeitperiode dosiert wird, dosiert werden und in dem Zeitintervall relativ niedriger Dosage 20 %. Die Zeitintervalle können entsprechend der Filterstundenleistung der zur Stabilisierung verwendeten Filtereinrichtung (beispielsweise der in Figur 5 gezeigten Filtereinrichtung 13) und/oder dem Fassungsvolumen des Drucktanks, der das stabilisierte Bier aufnimmt, (beispielsweise des in Figur 5 gezeigten Drucktanks 15) gewählt werden. Über die Zeitdauer des Stabilisierungsprozesses der Charge, die mehrere Zeitperioden (und somit Zeitintervalle) umfasst, kann eine relativ gleichförmige Reduktionsrate der Trübungsbildner erreicht werden.

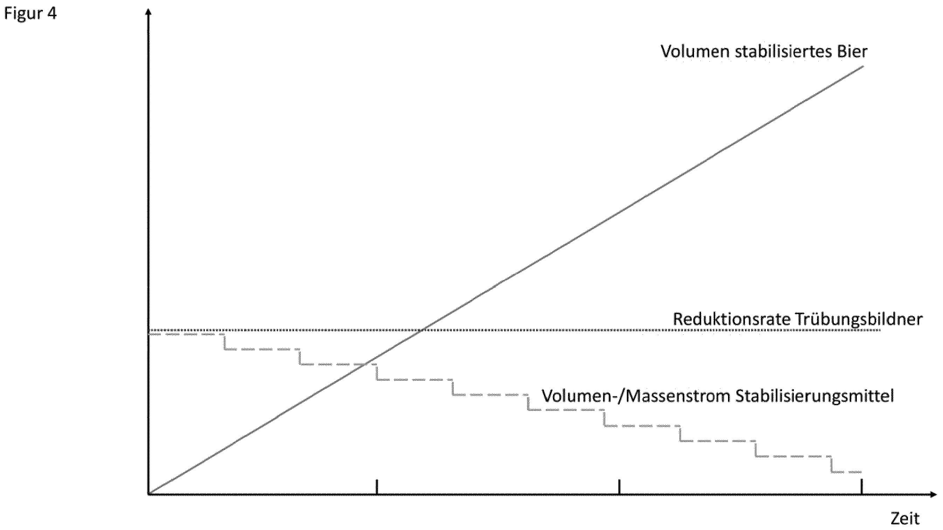

Gemäß der in Figur 4 gezeigten Ausführungsform erfolgt die Dosage des Stabilisierungsmittels über die Zeitdauer des Stabilisierungsprozesses einer Charge zu stabilisierenden Biers in einer Mehrzahl an Zeitintervallen innerhalb derer jeweils ein konstanter Massen-/Volumenstrom des zudosierten Stabilisierungsmittels eingestellt wird, wobei der Massen-/Volumenstrom im Verlauf des Stabilisierungsprozesses, d.h. über die Zeitdauer, von Zeitintervall zu Zeitintervall abnimmt. Das erste Plateau des in Figur 4 gezeigten Massen-/Volumenstroms des zudosierten Stabilisierungsmittels ist somit das höchste und das letzte Plateau das niedrigste. So kann einer im Verlauf der Zeitdauer im Stand der Technik auftretenden anwachsenden Reduktionsrate der Trübungsbildner (siehe Figur 1) entgegengewirkt werden.

## Patentansprüche

1. Verfahren zur Bierstabilisierung, mit
Zuleiten einer Charge von zu stabilisierenden Bier zu einem Filtermittel über eine Zeitdauer, die aus einer Mehrzahl von Zeitintervallen besteht; und
Dosieren eines Stabilisierungsmittels zu dem zu stabilisierenden Bier innerhalb der Zeitdauer, um Trübungsbildner aus dem zu stabilisierenden Bier zu entfernen; und
wobei
das Dosieren des Stabilisierungsmittels mithilfe einer gemäß einem vorbestimmten Dosageschema geregelten oder gesteuerten Dosagepumpe (14) derart erfolgt, dass in zumindest zwei Zeitintervallen der Mehrzahl von Zeitintervallen unabhängig von einer in den zumindest zwei Zeitintervallen vorliegenden Menge der Trübungsbildner in dem zu stabilisierenden Bier das Stabilisierungsmittel mit einem unterschiedlichen Massenstrom zudosiert wird, wobei das Dosageschema zeitabhängig und unabhängig von einer Konzentration der Trübungsbildner in dem zu stabilisierenden Bier ist.

2. Das Verfahren gemäß Anspruch 1, in dem in einem ersten Zeitintervall der Mehrzahl von Zeitintervallen, insbesondere zu Beginn der Zeitdauer, das Stabilisierungsmittel mit einem ersten Massenstrom zudosiert wird, und einem zweiten Zeitintervall der Mehrzahl von Zeitintervallen, das innerhalb der Zeitdauer dem ersten Zeitintervall folgt, das Stabilisierungsmittel mit einem zweiten Massenstrom zudosiert wird, der kleiner als der erste Massenstrom ist.

3. Das Verfahren gemäß Anspruch 2, in dem in einem dritten Zeitintervall der Mehrzahl von Zeitintervallen, das zwischen dem ersten Zeitintervall und dem zweiten Zeitintervall liegt, kein Stabilisierungsmittel zudosiert wird.

4. Das Verfahren gemäß Anspruch 2, in dem über zumindest einen Teil der Mehrzahl von Zeitintervallen in jeweils aneinander angrenzenden Zeitintervallen abwechselnd das Stabilisierungsmittel mit dem ersten Massenstrom und dem zweiten Massenstrom zudosiert wird.

5. Das Verfahren gemäß Anspruch 2, in dem über zumindest einen Teil der Mehrzahl von Zeitintervallen das Stabilisierungsmittel mit einem im Verlauf der Zeitdauer von Zeitintervall zu Zeitintervall abnehmenden Massenstrom zudosiert wird.

6. Das Verfahren gemäß einem der vorhergehenden Ansprüche, in dem das Dosageschema den Massenstrom des zudosierten Stabilisierungsmittels in Abhängigkeit ausschließlich von a) der Zeit innerhalb der Zeitdauer und/oder b) dem stabilisierten Volumen des zu stabilisierenden Biers vorgibt.

7. Verfahren zum Behandeln von Bier mit den Schritten des Verfahrens gemäß einem der vorhergehenden Ansprüche und mit Filtrieren des zu stabilisierenden Biers vor dem Zuleiten der Charge von zu stabilisierenden Bier zu dem Filtermittel.

8. Verfahren zum Behandeln von Bier mit den Schritten des Verfahrens gemäß einem der Ansprüche 1 bis 6 und mit Filtrieren des zu stabilisierenden Biers mithilfe des Filtermittels.

9. Das Verfahren gemäß einem der vorhergehenden Ansprüche, in dem das Filtermittel Teil eines Anschwemmfilters ist und insbesondere eine Filterkerze eines Anschwemmkerzenfilters ist oder umfasst.

10. Das Verfahren gemäß einem der vorhergehenden Ansprüche, in dem das Stabilisierungsmittel Polyvinylpolypyrrolidon ist oder umfasst.

11. Das Verfahren gemäß einem der vorhergehenden Ansprüche, in dem das gesamte Volumen der Charge zur Stabilisierung durch eine das Filtermittel umfassende Filtereinrichtung (13) geleitet wird.

12. Anlage (10) zur Bierherstellung, mit einer Filtereinrichtung (13) mit einem Filtermittel, einer Dosagepumpe (14); und
einer Steuerungs-/Regeleinrichtung (16), die dazu ausgebildet ist,
das Zuleiten einer Charge von zu stabilisierenden Bier zu dem Filtermittel über eine Zeitdauer, die aus einer Mehrzahl von Zeitintervallen besteht, zu steuern oder regeln;
die Dosagepumpe (14) zum Dosieren eines Stabilisierungsmittels zu dem zu stabilisierenden Bier innerhalb der Zeitdauer, um Trübungsbildner aus dem zu stabilisierenden Bier zu entfernen, zu steuern oder regeln; und
die Dosagepumpe (14) gemäß einem vorbestimmten Dosageschema derart zu steuern oder regeln, dass das Dosieren des Stabilisierungsmittels derart erfolgt, dass in zumindest zwei Zeitintervallen der Mehrzahl von Zeitintervallen unabhängig von einer in den zumindest zwei Zeitintervallen vorliegenden Menge der Trübungsbildner in dem zu stabilisierenden Bier das Stabilisierungsmittel mit einem unterschiedlichen Massenstrom zudosiert wird, wobei das Dosageschema zeitabhängig und unabhängig von einer Konzentration der Trübungsbildner in dem zu stabilisierenden Bier ist.

## Claims

1. Method for stabilizing beer, comprising
feeding a batch of beer to be stabilized to a filtering means over a period of time consisting of a plurality of time intervals; and
dosing a stabilizing agent into the beer to be stabilized within said time period to remove turbidity-causing substances from the beer to be stabilized; and
wherein
the dosing of the stabilizing agent is performed by means of a dosing pump (14) regulated or controlled according to a predetermined dosing scheme such that, in at least two of the plurality of time intervals, the stabilizing agent is dosed at a different mass flow rate regardless of the amount of turbidity-causing substances present in the beer to be stabilized during those at least two time intervals, wherein the dosing schedule is time-dependent and independent of the concentration of the turbidity-causing substances in the beer to be stabilized.

2. The method according to claim 1, in which, in a first time interval of the plurality of time intervals, in particular at the beginning of the time period, the stabilizing agent is dosed at a first mass flow rate, and in a second time interval of the plurality of time intervals, which follows the first time interval within the time period, the stabilizing agent is dosed at a second mass flow rate that is smaller than the first mass flow rate.

3. The method according to claim 2, in which, during a third time interval of the plurality of time intervals, which lies between the first time interval and the second time interval, no stabilizing agent is dosed.

4. The method according to claim 2, in which, over at least a portion of the plurality of time intervals, the stabilizing agent is alternately dosed at the first mass flow rate and the second mass flow rate in adjacent time intervals.

5. The method according to claim 2, in which, over at least a portion of the plurality of time intervals, the stabilizing agent is dosed at a mass flow rate that decreases from one time interval to the next over the course of the time period.

6. The method according to any of the preceding claims, wherein the dosing scheme specifies the mass flow rate of the added stabilizing agent as a function exclusively of a) the time within the time period and/or b) the stabilized volume of the beer to be stabilized.

7. Method for treating beer comprising the steps of the method according to any one of the preceding claims and filtering the beer to be stabilized before feeding the batch of beer to be stabilized to the filter medium.

8. A method for treating beer comprising the steps of the method according to any one of claims 1 through 6 and filtering the beer to be stabilized using the filter medium.

9. The method according to any of the preceding claims, in which the filter medium is part of a pre-coating filter and, in particular, is or comprises a filter cartridge of a pre-coating cartridge filter.

10. The method according to any of the preceding claims, in which the stabilizing agent is or comprises polyvinylpolypyrrolidone.

11. The method according to any of the preceding claims, wherein the entire volume of the batch to be stabilized is passed through a filter device (13) comprising the filter medium.

12. A beer production plant (10) comprising a filter device (13) with a filter medium, a dosing pump (14); and
a control/regulation device (16) configured to
control or regulate the feeding of a batch of beer to be stabilized to the filter medium over a period of time consisting of a plurality of time intervals;
to control or regulate the dosing pump (14) for dosing a stabilizing agent into the beer to be stabilized within the time period in order to remove turbidity-causing substances from the beer to be stabilized; and
to control or regulate the dosing pump (14) according to a predetermined dosing scheme such that the dosing of the stabilizing agent occurs in such a way in at least two of the plurality of time intervals, the stabilizing agent is dosed at a different mass flow rate, regardless of the amount of turbidity-causing substances present in the beer to be stabilized during those at least two time intervals, wherein the dosing schedule is time-dependent and independent of the concentration of the turbidity-causing substances in the beer to be stabilized.

## Revendications

1. Procédé de stabilisation de bière, comprenant les étapes consistant à :
acheminer un lot de bière à stabiliser jusqu'à un moyen de filtration sur une période de temps constituée d'une pluralité d'intervalles de temps ; et
ajouter de manière dosée un agent stabilisant à la bière à stabiliser à l'intérieur de la période de temps afin d'éliminer les opacifiants de la bière à stabiliser ; et
dans lequel :
l'ajout de manière dosée de l'agent stabilisant intervient à l'aide d'une pompe d'ajout dosé (14) régulée ou commandée selon un schéma d'ajout dosé prédéterminé de telle manière que l'agent stabilisant est ajouté de manière dosée avec un débit massique différent, à l'intérieur d'au moins deux intervalles de temps parmi la pluralité d'intervalles de temps et indépendamment de la quantité d'opacifiants présente à l'intérieur des au moins deux intervalles de temps dans la bière à stabiliser, dans lequel le schéma d'ajout dosé est dépendant du temps et indépendant d'une concentration en opacifiants dans la bière à stabiliser.

2. Procédé selon la revendication 1, dans lequel, à l'intérieur d'un premier intervalle de temps parmi la pluralité d'intervalles de temps, en particulier au début de la période de temps, l'agent stabilisant est ajouté de manière dosée avec un premier débit massique, et, à l'intérieur d'un deuxième intervalle de temps parmi la pluralité d'intervalles de temps qui suit le premier intervalle de temps sur la période de temps, l'agent stabilisant est ajouté de manière dosée avec un second débit massique inférieur au premier débit massique.

3. Procédé selon la revendication 2, dans lequel aucun agent stabilisant n'est ajouté de manière dosée à l'intérieur d'un troisième intervalle de temps parmi la pluralité d'intervalles de temps qui se situe entre le premier intervalle de temps et le deuxième intervalle de temps.

4. Procédé selon la revendication 2, dans lequel, sur au moins une partie de la pluralité d'intervalles de temps, l'agent stabilisant est ajouté de manière dosée avec le premier débit massique et avec le deuxième débit massique de manière alternée à l'intérieur d'intervalles de temps respectivement adjacents.

5. Procédé selon la revendication 2, dans lequel, sur au moins une partie de la pluralité d'intervalles de temps, l'agent stabilisant est ajouté de manière dosée avec un débit massique qui diminue d'intervalle de temps en intervalle de temps au cours de la période de temps.

6. Procédé selon l'une quelconque des revendications précédentes, dans lequel le schéma d'ajout dosé spécifie le débit massique de l'agent stabilisant ajouté de manière dosée, en fonction exclusivement a) du temps à l'intérieur de la période de temps et/ou b) du volume stabilisé de la bière à stabiliser.

7. Procédé de traitement de bière comprenant les étapes du procédé selon l'une quelconque des revendications précédentes et comprenant une étape consistant à filtrer la bière à stabiliser avant l'acheminement du lot de bière à stabiliser jusqu'au moyen de filtration.

8. Procédé de traitement de bière comprenant les étapes du procédé selon l'une quelconque des revendications 1 à 6 et comprenant une étape consistant à filtrer la bière à stabiliser à l'aide du moyen de filtration.

9. Procédé selon l'une quelconque des revendications précédentes, dans lequel le moyen de filtration fait partie d'un filtre à précouche et est ou comprend en particulier une bougie de filtration d'un filtre à bougie à précouche.

10. Procédé selon l'une quelconque des revendications précédentes, dans lequel l'agent stabilisant est ou comprend de la polyvinylpolypyrrolidone.

11. Procédé selon l'une quelconque des revendications précédentes, dans lequel le volume du lot est guidé en totalité à travers un dispositif de filtration (13) comprenant le moyen de filtration en vue de la stabilisation.

12. Installation (10) permettant de produire de la bière, comprenant un dispositif de filtration (13) présentant un moyen de filtration, une pompe d'ajout dosé (14) ; et
un dispositif de commande/régulation (16) qui est conçu pour
commander ou réguler l'acheminement d'un lot de bière à stabiliser jusqu'au moyen de filtration sur une période de temps constituée d'une pluralité d'intervalles de temps ; commander ou réguler la pompe d'ajout dosé (14) afin d'ajouter de manière dosée un agent stabilisant à la bière à stabiliser à l'intérieur de la période de temps afin d'éliminer des opacifiants de la bière à stabiliser ; et
commander ou réguler la pompe d'ajout dosé (14) selon un schéma d'ajout dosé prédéterminé, de telle manière que l'ajout de manière dosée de l'agent stabilisant intervient de telle manière que l'agent stabilisant est ajouté de manière dosée avec un débit massique différent à l'intérieur d'au moins deux intervalles de temps parmi la pluralité d'intervalles de temps et indépendamment de la quantité des opacifiants présente à l'intérieur des au moins deux intervalles de temps dans la bière à stabiliser, dans laquelle le schéma d'ajout dosé est dépendant du temps et indépendant d'une concentration en opacifiants dans la bière à stabiliser.
